## Europäisches Patentamt
## European Patent Office
## Office européen des brevets

(19)

(11) Veröffentlichungsnummer : **0 156 113**
**B1**

(12) **EUROPÄISCHE PATENTSCHRIFT**

(45) Veröffentlichungstag der Patentschrift :
08.07.87

(51) Int. Cl.⁴ : **B 65 G 17/24**

(21) Anmeldenummer : **85100806.0**

(22) Anmeldetag : **26.01.85**

(54) **Staurollenförderer.**

(30) Priorität : **22.02.84 DE 3406352**

(43) Veröffentlichungstag der Anmeldung :
**02.10.85 Patentblatt 85/40**

(45) Bekanntmachung des Hinweises auf die Patenterteilung : **08.07.87 Patentblatt 87/28**

(84) Benannte Vertragsstaaten :
**AT BE CH FR GB IT LI NL SE**

(56) Entgegenhaltungen :
**DE-B- 1 036 752**
**DE-U- 8 227 706**
**US-A- 2 734 618**

(73) Patentinhaber : **Burkhardt, Volker**
**Lerchenstrasse 29**
**D-7085 Bopfingen (DE)**

(72) Erfinder : **Burkhardt, Volker**
**Lerchenstrasse 29**
**D-7085 Bopfingen (DE)**

(74) Vertreter : **Lorenz, Werner, Dipl.-Ing.**
**Fasanenstrasse 7**
**D-7920 Heidenheim (DE)**

Jouve, 18, rue St-Denis, 75001 Paris, France

## Beschreibung

Die Erfindung betrifft einen Staurollenförderer zur Forderung von Stückgut mit einer Vielzahl von Laufrollen, von denen jeweils zwei im Abstand voneinander auf einem Bolzen drehbar angeordnet sind, wobei hintereinander angeordnete Laufrollen jeweils durch seitlich auf den Bolzen angeordnete Laschen miteinander verbunden sind und so eine endlose Kette bilden, und mit ebenfalls auf Bolzen mit Laufrollen angeordneten Förderrollen, die jeweils zwischen zwei hintereinanderliegenden Laufrollen angeordnet sind, wobei die Förderrollen größere Durchmesser aufweisen als die Laufrollen, und wobei jeweils die durch zwei hintereinanderliegende Förderrollen mit dazwischenliegenden Bolzen gebildeten einschnittartigen Vertiefungen durch brückenbildende Füllglieder ausgefüllt sind, welche auf den jeweiligen Bolzen oder auf Abstandshülsen auf den Bolzen befestigt sind.

Ein derartiger Staurollenförderer, auch Staurollenkette genannt, ist z. B. in dem DE-GM 82 27 706 beschrieben. Staurollenförderer dieser Art sind in oder auf Tragholmen auf Laufbahnen geführt, wobei zumeist zwei endlose Ketten in einem Gestell im Abstand und parallel voneinander angeordnet sind. Die beiden Ketten werden synchron angetrieben und transportieren dabei auf den Förderrollen das zu fördernde Stückgut. Die Staurollenförderer bestehen aus einer Vielzahl von aneinandergereihten Einzelgliedern, wobei immer zwei hintereinander angeordnete Einzelglieder ein Gliederpaar bilden.

Zum Transport sind nun die Durchmesser der Förderrollen größer als die Durchmesser der Bolzen und der seitlich außen an den Laschen angeordneten Laufrollen, welche auf der Laufbahn abrollen. Aus diesem Grunde entsteht durch die Aneinanderreihung einer Förderrolle, dem nachfolgenden Bolzen oder einer über dem Bolzen geschobenen Abstandshülse und der dann wieder folgenden Förderrolle eine einsdmittartige Vertiefung. In diese einschnittartigen Vertiefungen können nun Kleinteile fallen, die dann Schäden innerhalb der gesamten Fördervorrichtung, sowie Verletzungen und als Folge davon Betriebsunterbrechungen hervorrufen. So können z. B. Metallteile in die einschnittartigen Vertiefungen fallen, so daß der Staurollenförderer schlagartig stehen bleibt, wenn diese Teile dann überstehen und das zu transportierende Stückgut darauf aufläuft. Die Kette kann dabei reißen. Weiterhin können Lager platzen und auch die gesamte Antriebseinrichtung kann beschädigt werden. Ebenso besteht auch eine Unfallgefahr insofern, daß z. B. Finger des Bedienungspersonals versehentlich in diese Vertiefungen gelangen können, wodurch erhebliche Verletzungen hervorgerufen werden.

Aus diesem Grunde ist in dem DE-GM 82 27 706 bereits vorgeschlagen worden in diese einschnittartigen Vertiefungen jeweils Füllstücke bzw. Füllglieder einzusetzen. Diese Füllstücke werden nach Art eines Schnappverschlusses auf die Bolzen bzw. Abstandshülsen geschoben und decken somit brückenartig diese Vertiefungen ab. Diese Abdeckungsart funktioniert auf geraden Stücken einwandfrei. Es hat sich jedoch herausgestellt, daß bei Umlenkungen der Stauförderkette über Kettenräder seitliche Spalte zwischen den Förderrollen und der Füllglieder entstehen. In diese Spalten können noch Teile fallen, die anschließend bei einem Weiterlaufen des Staurollenförderers in gerader Richtung aufgrund des sich wieder verschließenden Spaltes ebenfalls zu Zerstörungen führen können. Weiterhin ist bei dieser Ausgestaltung von Nachteil, daß mit diesen Füllgliedern der Staurollenförderer nur in eine Richtung umgelenkt werden konnte. Die Füllglieder füllen nämlich im gestreckten Zustand des Staurollenförderers den Zwischenraum zwischen zwei Förderrollen nahezu vollständig aus. Bei Umlenkung des Staurollenförderers nach oben müßte sich jedoch der Zwischenraum verkleinern, was jedoch durch die Füllglieder nicht möglich ist.

Der vorliegenden Erfindung liegt daher die Aufgabe zugrunde einen Staurollenförderer der eingangs erwähnten Art zu schaffen, dessen Funktionsfähigkeit und Sicherheit noch besser ist und dessen Einsatzmöglichkeiten höher sind.

Erfindungsgemäß wird diese Aufgabe dadurch gelöst, daß jedes Füllglied zweiteilig ausgebildet ist, deren beiden Gliederteile gelenkig zueinander sind, wobei die Gliederteile jeweils auf der Oberseite ein Brückenteil bilden, von dem aus Stege nach vorne in Richtung auf das andere Gliederteil und nach unten in die Vertiefung abzweigen und wobei die Stege der beiden zusammenarbeitenden Gliederteile zahnartig bzw. reißverschlußartig ineinander greifen.

Durch die Zweiteiligkeit jedes Füllgliedes und deren Gelenkigkeit zueinander wird nun erfindungsgemäß erreicht, daß sich die Gliederteile an die Größe der Vertiefungen bzw. des Oberflächenspaltes anpassen können. Erfolgt z. B. eine Umlenkung des Staurollenförderers über ein Kettenrad nach unten, womit eine Spaltvergrößerung auftritt, bleibt trotzdem der Oberflächenspalt geschlossen. Jeweils die beiden zusammenarbeitenden Gliederteile werden zwar auf ihrer Oberseite voneinander wegbewegt und zwar zwangsweise durch die Förderrollen, welche die nach unten führenden Stege entsprechend wegdrücken, aber dadurch daß die Gliederteile zahnartig ineinander greifen, liegt trotzdem weiterhin eine geschlossene Brücke vor. Dadurch können auch bei Umlenkungen keine Kleinteile in die einschnittartigen Vertiefungen fallen.

Durch die gelenkige Verbindung der beiden Gliederteile kann der Staurollenförderer jedoch auch nach oben abgelenkt werden, wobei eine Verkleinerung des Oberflächenspaltes auftritt. In diesem Falle schieben sich die beiderseitigen Stege weiter ineinander. Auf diese Weise wird der Einsatzbereich eines Staurollenförderers bzw. deren Umlenkmöglichkeiten erhöht.

In Ausgestaltung der Erfindung kann vorgesehen sein, daß die Stege den dazugehörigen Bolzen bzw. die Abstandshülse wenigstens um mehr als die Hälfte des Umfanges des Bolzens bzw. der Abstandshülse umfassen. Auf diese Weise ist eine ausreichende Überlappung gegeben, um Änderungen des Oberflächenspaltes ausgleichen zu können.

Damit die Füllglieder auch noch nachträglich ohne großen Aufwand in bereits in Betrieb befindliche Staurollenförderer eingebracht werden können, sind die Stege in vorteilhafter Weise elastisch und über den Bolzen bzw. der Abstandshülse nach Art eines Schnappverschlusses geschoben.

Bei neuen Staurollenförderern können die Füllglieder gleich bei der Montage auf die Bolzen oder Abstandshülsen geschoben werden. In diesem Falle können die Stege in einer Ebene jedes Gliederteiles im unteren Bereich miteinander verbunden sein, wobei zwischen ihnen eine Bohrung gebildet ist, deren Durchmesser um ein geringes Maß größer ist, als der Durchmesser des dazugehörigen Bolzens bzw. der Abstandshülse.

Auf diese Weise ist eine feste Verbindung der Füllglieder mit dem dazugehörigen Bolzen bzw. der Abstandshülse geschaffen.

Die Anzahl der Stege wird in Abhängigkeit von dem Anwendungsfall bzw. der Breite des Staurollenförderers gewählt werden. Vorzugsweise wird man jeweils zwei bis sechs, z. B. vier Stege wählen. Damit ist eine kammartige Ausbildung geschaffen, wobei jeweils die Stege der anderen Seite in die Zwischenräume des Gegenstückes ragen. Je mehr Stege vorhanden sind, desto geringer werden die Zwischenräume und desto geschlossener bleibt die Brücke auch bei einer Vergrößerung des Oberflächenspaltes während der Umlenkung der Staurollenförderer.

Vorteilhafte Ausgestaltungen und Weiterbildungen der Erfindung ergeben sich aus weiteren Unteransprüchen und aus dem nachfolgend anhand der Zeichnung prinzipmäßig beschriebenem Ausführungsbeispiel.

Es zeigen :

Figur 1 Eine Draufsicht auf einen Teil des Staurollenförderers mit dem erfindungsgemäßen Fullglied ;

Figur 2 eine Seitenansicht der Fig. 1 in Prinzipdarstellung ohne Laschen ;

Figur 3 eine Seitenansicht des linken Gliederteiles eines Füllgliedes ;

Figur 4 eine Ansicht des Gliederteiles nach der Fig. 3 aus Pfeilrichtung A ;

Figur 5 eine Draufsicht auf das Gliederteil nach der Fig. 3 ;

Figur 6 eine Seitenansicht des rechten Gliederteiles ;

Figur 7 eine Ansicht entsprechend der Fig. 2 mit einer Umlenkung des Staurollenförderers nach oben ;

Figur 8 eine Ansicht nach der Fig. 2 mit einer Umlenkung des Staurollenförderers nach unten.

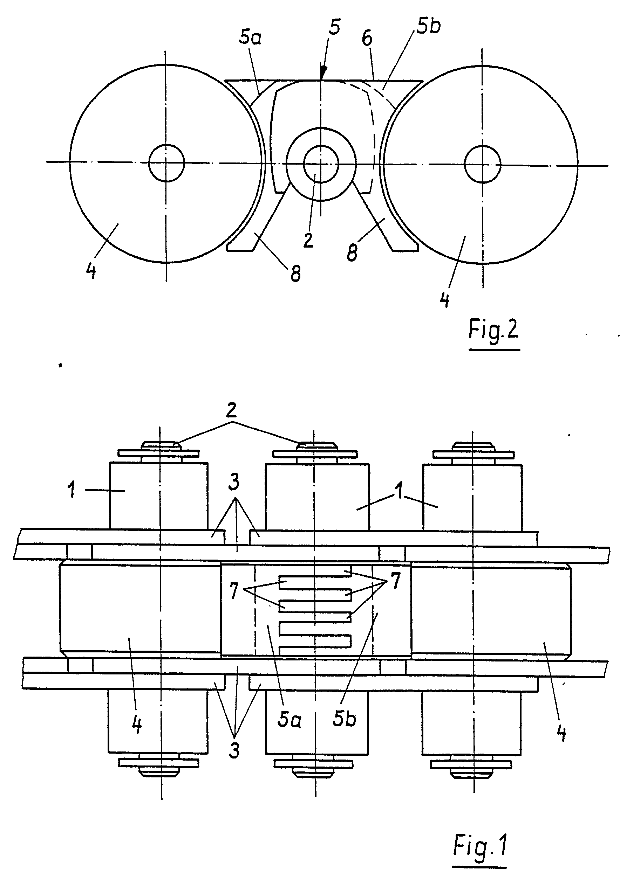

Ein Staurollenförderer besteht in üblicher Weise aus einer Vielzahl von Laufrollen 1, die jeweils paarweise auf Bolzen 2 drehbar angeordnet sind. Die Bolzen 2 sind jeweils auf beiden Seiten durch Laschen 3 miteinander verbunden. Zwischen den Laschen befinden sich Förderrollen 4, welche größere Durchmesser aufweisen als die Laufrollen 1. Aus diesem Grunde ist nur jeder zweite Bolzen 2 mit einer Förderrolle 4 versehen, während der dazwischenliegende Bolzen frei bleibt bzw. ggf. mit einer Abstandshülse versehen ist, damit die seitlichen Laschen 3 einwandfrei geführt sind. Durch eine Aneinanderreihung der in der Fig. 1 dargestellten Glieder kann eine endlose Kette geschaffen werden, die auf einem nicht dargestellten Tragholm über die Laufrollen 1 läuft.

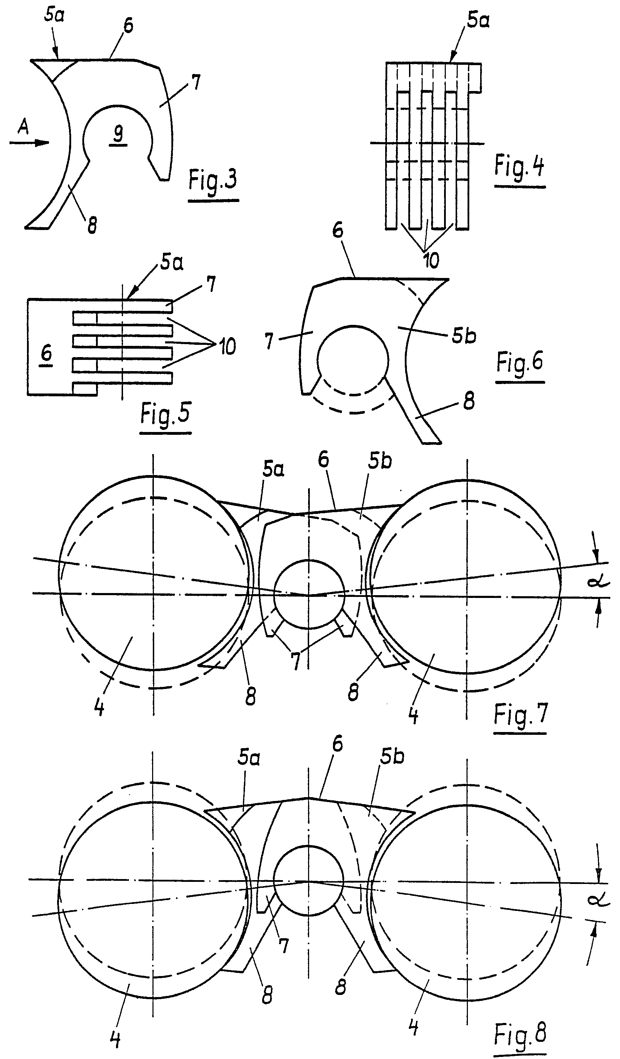

Zum Abdecken der einschnittartigen Vertiefung zwischen jeweils zwei benachbart zueinanderliegenden Förderrollen 4 dient nun jeweils ein brückenbildendes Füllglied 5, das aus den beiden Gliederteilen 5a und 5b besteht. Die Anordnung der beiden Gliederteile 5a und 5b ist aus den Fig. 1 und 2 und deren Ausbildung aus den Fig. 3 bis 6 ersichtlich.

Jedes Gliederteil 5a bzw. 5b besitzt auf seiner Oberseite ein Brückenteil 6, das im wesentlichen eben ist und im eingebauten Zustand des Staurollenförderers wenigstens annähernd parallel zu der Laufbahn verläuft. Von dem Brückenteil 6 ragen mehrere Stege 7 (in der Zeichnung sind vier Stück dargestellt) nach vorne in Richtung auf das jeweilige Gegenstück. Die Stege 7 sind im vorderen Bereich nach unten abgebogen. Ebenso ragen von dem Brückenteil 6 im wesentlichen direkt nach unten auf der Rückseite ebenfalls mehrere Stege 8 (dargestellt sind in der Zeichnung wiederum vier Stück) nach unten. Die Rückseiten der Stege 8, welche den Förderrollen 4 zugewandt sind, weisen eine Krümmung auf, die um ein geringes Maß größer ist als der Krümmungsradius der Förderrollen 4. Die Innenseiten der Stege 7 und 8, welche jeweils paarweise in einer Ebene im oberen Bereich miteinander verbunden sind, definieren im unteren Bereich eine Öffnung 9, die wenigstens annähernd dem Durchmesser des Bolzens 2 bzw. einer darüber geschobenen Abstandshülse entspricht. Die Öffnung 9 ist dabei so groß gewählt, daß sie den Bolzen bzw. die Abstandshülse um etwas mehr als die Hälfte umfasst. Die beiden Gliederteile 5a und 5b sind aus elastischem Kunststoff, vorzugsweise Spritzguß, und können damit nach Art eines Schnappverschlusses auf den Bolzen bzw. die Abstandshülse jeweils aufgeschoben werden. Die Gliederteile 5a und 5b sind dabei jeweils komplimentäre Gegenstücke, d. h., die Stege 7 und 8 eines Gliederteiles liegen jeweils so, daß sie in die Zwischenräume 10 des anderen Gliederteiles eingeschoben werden können. Damit greifen die Stege 7 bzw. 8 der beiden Gliederteile 5a und 5b kamm- bzw. zahn- oder reißverschlußartig ineinander.

In der Fig. 7 ist die Position der Gliederteile 5a und 5b dargestellt, die diese einnehmen, wenn der Staurollenförderer um einen Winkel α nach oben abgelenkt wird, wodurch sich der Oberflächenspalt der einschnittartigen Vertiefung entsprechend verringert. In diesem Falle schieben sich, wie ersichtlich, die Stege 7 weiter ineinander, wobei sie jeweils unter das Brückenteil 6 des anderen Gliederteiles in den Zwischenräumen 10 tauchen. Dadurch daß die Außenform der Stege 8 der Krümmung bzw. dem Radius der Förderrollen angepasst ist, werden die Gliederteile 5a und 5b durch das Abknicken der Förderrollen 4 aufgrund ihrer Anlage an diesen entsprechend relativ zueinander verschoben.

In der Fig. 8 ist die Position dargestellt, die die Gliederteile 5a und 5b zueinander einnehmen, wenn der Staurollenförderer nach unten um den Winkel α abgelenkt wird, wodurch sich eine Spaltvergrößerung einstellt. In diesem Falle passen sich die Gliederteile 5a und 5b wiederum dieser Spaltvergrößerung an. Hierzu tauchen die Stege 7 weiter aus der einschnittartigen Vertiefung heraus, wobei sich deren Enden jeweils von dem Gegenteil etwas entfernen. Aus diesem Grunde öffnen sich zwar in geringem Umfange die Zwischenräume 10 zwischen den Stegen 7 entsprechend der Größe des Winkels α, aber die dabei entstehenden Spalte sind sehr gering im Vergleich zur Gesamtbreite.

Durch eine entsprechende Anzahl der Stege lassen sich die Zwischenräume auch entsprechend schmal halten, so daß auch ganz kleine Teile, wie z. B. Splinte oder kleine Schrauben nicht hineinfallen können.

Im allgemeinen werden nur Winkeländerungen in Größen bis ca. 8° vorkommen. Die Gliederteile 5a und 5b können jedoch noch wesentlich größere Winkel verkraften.

Wie aus den Fig. 3 und 6 ersichtlich ist, sind die nach vorne gerichteten Stege 7 im vorderen Bereich auf der Außenseite nach unten abgekantet, wodurch sie leichter unter das jeweils andere Brückenteil 6 in die Zwischenräume 10 tauchen können.

Die Größe der Füllglieder 5 ist so gewählt, daß die Oberflächen der Brückenteile 6 gegenüber den Laufflächen der Förderrollen 4 etwas niedriger liegen, damit die Füllglieder 5 den Transport der zu fördernden Güter nicht stören.

Wenn die Füllglieder 5 nicht nachträglich in einen bereits vorhandenen Staurollenförderer eingebracht werden, sondern eine Neuanfertigung des Staurollenförderers mit den erfindungsgemäßen Füllgliedern 5 vorgenommen wird, kann statt der Öffnung 9 auch eine geschlossene Bohrung vorhanden sein. In diesem Falle sind die Stege 7 und 8 einer Ebene auch im unteren Bereich miteinander verbunden. Diese Ausgestaltung ist in der Fig. 6 gestrichelt dargestellt.

**Patentansprüche**

1. Staurollenförderer zur Förderung von Stückgut mit einer Vielzahl von Laufrollen, von denen jeweils zwei im Abstand voneinander auf einem Bolzen drehbar angeordnet sind, wobei hintereinander angeordnete Laufrollen jeweils durch seitlich auf den Bolzen angeordnete Laschen miteinander verbunden sind und so eine endlose Kette bilden, und mit ebenfalls auf Bolzen mit Laufrollen angeordneten Förderrollen, die jeweils zwischen zwei hintereinanderliegenden Laufrollen angeordnet sind, wobei die Förderrollen größere Durchmesser aufweisen als die Laufrollen, und wobei jeweils die durch zwei hintereinanderliegende Förderrollen mit dazwischenliegenden Bolzen gebildeten, einschnittartigen Vertiefungen durch brückenbildende Füllglieder ausgefüllt sind, welche auf den jeweiligen Bolzen oder auf Abstandshülsen auf den Bolzen befestigt sind, dadurch gekennzeichnet, daß jedes Füllglied (5) zweiteilig ausgebildet ist, deren beiden Gliederteile (5a, 5b) gelenkig zueinander sind, wobei die Gliederteile jeweils auf der Oberseite ein Brückenteil (6) bilden, von dem aus Stege (7, 8) nach vorne in Richtung auf das andere Gliederteil und nach unten in die Vertiefung abzweigen, und wobei die Stege (7, 8) der beiden zusammenarbeitenden Gliederteile (5a, 5b) zahnartig bzw. reißverschlußartig ineinander greifen.

2. Staurollenförderer nach Anspruch 1 dadurch gekennzeichnet, daß die Stege (7, 8) den dazugehörigen Bolzen (2) bzw. die Abstandshülse wenigstens um mehr als die Hälfte des Umfanges des Bolzens bzw. der Abstandshülse umfassen.

3. Staurollenförderer nach Anspruch 2 dadurch gekennzeichnet, daß die Stege (7, 8) elastisch sind und über den Bolzen (2) bzw. die Abstandshülse nach Art eines Schnappverschlusses aufgeschoben sind.

4. Staurollenförderer nach Anspruch 2 dadurch gekennzeichnet, daß die Stege (7, 8) jedes Gliederteiles einer Ebene im unteren Bereich miteinander verbunden sind, wobei zwischen ihnen eine Bohrung gebildet ist, deren Durchmesser um ein geringes Maß größer ist, als der Durchmesser des dazugehörigen Bolzens (2) bzw. der Abstandshülse.

5. Staurollenförderer nach einem der Ansprüche 1-4 dadurch gekennzeichnet, daß jedes Gliederteil (5a, 5b) jeweils zwei bis sechs nach vorne und nach unten gerichtete Stege (7, 8) besitzt.

6. Staurollenförderer nach Anspruch 5 dadurch gekennzeichnet, daß jedes Gliederteil (5a, 5b) jeweils vier nach vorne und nach unten gerichtete Stege (7, 8) besitzt.

7. Staurollenförderer nach einem der Ansprüche 1-6 dadurch gekennzeichnet, daß die nach vorne gerichteten Stege (7) der Gliederteile (5a, 5b) wenigstens im vorderen Bereich nach unten abgerundet oder abgekantet sind.

8. Staurollenförderer nach einem der Ansprüche 1-7 dadurch gekennzeichnet, daß die Gliederteile (5a, 5b) aus Kunststoffspritzteilen bestehen.

9. Staurollenförderer nach einem der Ansprüche 1-8 dadurch gekennzeichnet, daß die Oberflächen der Brückenteile (6) der Gliederteile (5a, 5b) gegenüber den Laufflächen der Förderrollen (4) etwas niedriger liegen.

10. Staurollenförderer nach einem der Ansprüche 1-9 dadurch gekennzeichnet, daß die nach unten weisenden Stege (8) der Gliederteile (5a, 5b) auf ihren den Förderrollen (4) zugewandten Seiten wenigstens annähernd Krümmungen aufweisen, die denen der Förderrollen (4) entsprechen.

## Claims

1. Pressure roller conveyor for conveying piece goods having a plurality of runners, of which respectively two are spaced from one another and rotatably fixed on a pin, with runners disposed one behind another being connected to one another by plates arranged laterally on the pins and thus forming an endless chain, and having conveyor rollers also disposed on pins with runners, said rollers being disposed respectively between two runners one behind the other, the conveyor rollers having larger diameters than the runners, and notch-like depressions formed by two conveyor rollers one behind the other with intermediate pins being filled by bridge-building filling components which are fixed on the respective pins or on spacer tubes on the pins, characterised in that each filling component (5) is constructed in two parts, the two component parts (5a, 5b) of which are flexible in relation to one another, on the upper side the component parts forming a bridge part (6) from which flanges (7, 8) branch off forwards towards the other component part and downwards into the depression, and the flanges (7, 8) of the two cooperating component parts (5a, 5b) interlocking like teeth or like a zip fastener respectively.

2. Pressure roller conveyor according to Claim 1, characterised in that the flanges (7, 8) envelop the associated pin (2) or the spacer tube respectively at least by more than half the circumference of the bolt or the spacer tube respectively.

3. Pressure roller conveyor according to Claim 2, characterised in that the flanges (7, 8) are elastic and are pushed open by means of the pin (2) or the spacer tube respectively in the manner of a snap fastener.

4. Pressure roller conveyor according to Claim 2, characterised in that the flanges (7, 8) of each component part on one plane in the lower region are connected to one another, between them there being formed a hole, the diameter of which is slightly larger than the diameter of the associated pin (2) or spacer tube respectively.

5. Pressure roller conveyor according to one of Claims 1 to 4, characterised in that each component part (5a, 5b) has respectively two to six flanges (7, 8) directed forwards and downwards.

6. Pressure roller conveyor according to Claim 5, characterised in that each component part (5a, 5b) has respectively four flanges (7, 8) directed forwards and downwards.

7. Pressure roller conveyor according to one of Claims 1-6, characterised in that the flanges (7) directed forwards of the component parts (5a, 5b) are rounded off or chamfered downwards at least in the front region.

8. Pressure roller conveyor according to one of Claims 1-7, characterised in that the components parts (5a, 5b) consist of plastic sprayed parts.

9. Pressure roller conveyor according to one of Claims 1-8, characterised in that the surfaces of the bridge parts (6) of the component parts (5a, 5b) are somewhat lower than the rolling surfaces of the conveyor rollers (4).

10. Pressure roller conveyor according to one of Claims 1-9, characterised in that the flanges (8) pointing downwards of component parts (5a, 5b) have on the sides turned towards the conveyor rollers (4) at least approximately curves corresponding to those of the conveyor rollers (4).

## Revendications

1. Transporteur-accumulateur à rouleaux pour le transport de pièces, comportant des galets de roulement montés rotatifs deux par deux et à distance l'un de l'autre sur un axe, les galets consécutifs étant reliés les uns aux autres par des pattes montées latéralement sur les axes de manière à former une chaîne sans fin, et comportant des rouleaux de transport qui sont également montés sur des axes munis de galets de roulement et sont disposés entre deux galets de roulement consécutifs, dans lequel les rouleaux de transport présentent des diamètres supérieurs à ceux des galets de roulement, et dans lequel les creux définis respectivement par deux rouleaux de transport consécutifs et des axes intermédiaires sont remplis par des éléments de remplissage qui forment des ponts et qui sont fixés sur les axes respectifs ou sur des douilles intercalaires montées sur ces axes, caractérisé en ce que chaque élément de remplissage (5) est formé de deux pièces de remplissage (5a, 5b) articulées l'une à l'autre, chacune de ces pièces comportant du côté supérieur une partie de pontage (6), à partir de laquelle des nervures (7, 8) s'étendent vers l'avant en direction de l'autre pièce de l'élément de remplissage et vers le bas dans ledit creux, les nervures (7, 8) des deux pièces de remplissage associées (5a, 5b) étant engrenées les unes dans les autres comme des dents ou une fermeture à glissière.

2. Transporteur selon la revendication 1, caractérisé en ce que lesdites nervures (7, 8) entourent l'axe respectif (2) ou la douille intercalaire au moins sur plus de la moitié de la circonférence de l'axe ou de la douille.

3. Transporteur selon la revendication 2, caractérisé en ce que lesdites nervures (7, 8) sont élastiques et sont emboîtées sur l'axe (2) ou la douille par clipsage.

4. Transporteur selon la revendication 2, caractérisé en ce que les nervures (7, 8) de chaque pièce de remplissage sont reliées entre elles dans un plan dans leur partie inférieure et forment entre elles un alésage dont le diamètre est légèrement plus grand que le diamètre de l'axe (2) ou de la douille.

5. Transporteur selon l'une des revendications 1 à 4, caractérisé en ce que chaque pièce de remplissage (5a, 5b) possède deux à six nervures (7, 8) respectivement vers l'avant et vers le bas.

6. Transporteur selon la revendication 5, caractérisé en ce que chaque pièce de remplissage (5a, 5b) possède quatre nervures (7, 8) respectivement vers l'avant et vers le bas.

7. Transporteur selon l'une des revendications 1 à 6, caractérisé en ce que celles des nervures (7) des pièces de remplissage (5a, 5b) qui sont dirigées vers l'avant sont arrondies ou biseautées vers le bas au moins dans leur partie avant.

8. Transporteur selon l'une des revendications 1 à 7, caractérisé en ce que les pièces de remplissage (5a, 5b) sont des pièces injectées en matière synthétique.

9. Transporteur selon l'une des revendications 1 à 8, caractérisé en ce que les surfaces supérieures des parties de pontage (6) des pièces de remplissage (5a, 5b) se trouvent un peu plus bas que les portées des rouleaux de transport (4).

10. Transporteur selon l'une des revendications 1 à 9, caractérisé en ce que celles des nervures (8) des pièces de remplissage (5a, 5b) qui sont dirigées vers le bas présentent au moins approximativement, sur leurs faces situées en regard des rouleaux de transport (4), des courbures qui correspondent à celles de ces rouleaux (4).

0 1 5 6 1 1 3

Fig.2

Fig.1

Fig.3

Fig.4

Fig.5

Fig.6

Fig.7

Fig.8